# EUROPEAN PATENT APPLICATION

(11) **EP 1 526 219 A2**
(43) Date of publication of application: **27.04.2005**
(21) Application number: 04256545.7
(22) Date of filing: 22.10.2004
(51) Int. Cl.: E01C 19/15

(54) **A method and apparatus for aggregate grading and cleaning**

(30) Priority: 17.05.2004 GB 0410930; 24.10.2003 GB 0324834
(71) Applicant: Taylor, Robert, Sawtry, Cambridgeshire PE28 5SG (GB)
(72) Inventor: Taylor, Robert, Sawtry, Cambridgeshire PE28 5SG (GB)
(74) Representative: Lamb, Richard Andrew

(57) **Abstract**

A method of on-site aggregate cleaning and grading comprising applying a cleaning fluid to the aggregate flow during grading, in a first stage separating the washed aggregate from the cleaning fluid, in a second stage separating the silt from the cleaning fluid, and recirculating the cleaning fluid from the second separation stage to the flow of aggregate.

## Description

The present invention relates to a method and apparatus for aggregate grading and cleaning, particularly but not exclusively to a mobile aggregate cleaning and grading method and apparatus.

Traditionally, when re-surfacing roads, spray binder or tar is applied to the road surface and aggregate of an average diameter of 10 mm is applied over the binder layer. Subsequently, aggregate of a smaller diameter of typically 6 mm is applied over the 10 mm aggregate layer to fill in any gaps and to seal the road. Any excess aggregate is picked up by road sweepers and is taken to designated tipping areas.

In the past, road surfacing companies have attempted to clean the used aggregate in order that the aggregate can be re-used. The process was however uneconomic due to the relatively high transportation and processing costs for cleaning and grading the used aggregate in specialised plants. The cost of the re-used aggregate was consequently higher than the cost of unused aggregate.

Nowadays, companies therefore buy new aggregate and they discard the used aggregate. This poses environmental problems.

The present invention aims to obviate or at least mitigate the above described problems and/or to provide improvements generally.

In an embodiment of the invention, there is provided an aggregate cleaning apparatus, an aggregate grading or separation apparatus, a method of aggregate cleaning and a kit of parts according to any of the accompanying claims.

In an embodiment of the invention, there is provided a method of aggregate cleaning comprising providing means for applying a cleaning fluid to a flow of aggregate to wash the aggregate, in a first stage separating the washed aggregate from the cleaning fluid, in a second stage separating an unwanted substance from the cleaning fluid, and re-circulating the cleaning fluid such that the recirculated fluid is provided to the flow of aggregate.

In this way aggregates can be effectively cleaned whereby water usage is kept to a minimum as the bulk of the cleaning fluid is re-used after cleaning the aggregate by separation of unwanted substances from the cleaning fluid.

In a preferred embodiment, the cleaning fluid is water. However, other cleaning fluids may be used. These fluids may contain water in combination with other components such as cleaning agents which promote cleaning of the aggregate.

The unwanted substance may comprise aggregate residues and other aggregate residuals including aggregate of a grade which is too small to be graded. In some cases, this material is not re-usable in resurfacing or other building or construction applications. These substances or residues which are contained in the cleaning fluid after the aggregate is graded are hereinafter together called "silt".

In another embodiment of the invention, the method comprises the step of grading the aggregate, the cleaning fluid being collected whilst the aggregate is graded. Aggregate is graded on mesh screens or sieve trays which are permeable. This allows the fluid to be efficiently removed from the aggregate during grading as the fluid is drained from the aggregate.

In another embodiment of the invention, the method comprises the step of supplying cleaning fluid to allow the system to operate and to re-plenish any used fluid to ensure that the system has sufficient cleaning fluid to operate efficiently and effectively.

However, we emphasise here that the method only requires a very limited supply of cleaning fluid because the cleaning fluid is effectively re-used. This allows the method to be performed on-site where a limited fluid supply is available. Another important advantage of this method is that there is no or a very limited discharge of fluids containing silt. This greatly limits the environmental impact of the method and apparatus as herein described. In contrast, static aggregate cleaning plants have the important disadvantage that they use large quantities of clean water for cleaning the aggregate. The used water containing aggregate residues and other substances together called "silt" or "fines" is discarded thereby polluting surface water such as rivers and lakes.

In order to effectively separate the silt from the cleaning fluid, in a further embodiment, the second separation stage comprises settling the cleaning fluid to separate the silt from the cleaning fluid. For this purpose, the second separation stage may comprise providing a settling tank in the form of one or more reservoirs in which the silt is settled towards the bottom of the reservoir and the cleaning fluid is removed towards the top of the reservoir for it to be reused.

In this way the silt is efficiently and economically separated from the cleaning fluid. The second stage separation also has the advantage that it is robust as the separation does not require fine sieves or mesh screens which can become fouled or otherwise blocked.

In a preferred embodiment, the reservoirs are periodically or regularly freed from silt. The silt may be removed via one or more outlets which are situated near the bottom of the reservoir. The silt may be removed by suction and disposed of in an appropriate location.

In a further embodiment of the invention, the aggregate is graded prior to, during or after washing of the aggregate. The method may further comprise providing a collector for collecting cleaning fluid from the graded aggregate, and separating the collected cleaning fluid during the second separation stage.

The method of aggregate cleaning may be integrated into an apparatus for grading or separating aggregate. Preferably the apparatus is a mobile apparatus so that the apparatus can be located on site to minimise transportation costs of the used aggregate. This renders the method of the present invention economically viable.

In another embodiment of the invention, there is provided an apparatus for on-site cleaning of aggregate, comprising: means for applying a cleaning fluid to a flow of aggregate, first stage separation means for separating the washed aggregate from the cleaning fluid, second stage separation means for separating the silt from the cleaning fluid, and means for conveying the cleaning fluid from the second stage separation means to the flow of aggregate to re-circulate the cleaning fluid from the second stage separation means to the flow of aggregate.

As the cleaning fluid containing water is largely recycled throughout the process, the water usage of the apparatus is limited. Equally, as no or a negligible amount of water is discharged by the apparatus, the environmental impact is negligible. Furthermore, as the aggregate separation apparatus is mobile, it can be located at any desired location. To operate the apparatus, a cleaning fluid such as water is supplied, for example by a tanker. After supply of the fluid, the apparatus is self-sufficient and it can operate for periods of one to several hours depending on the overall quantity and quality of the aggregate to be cleaned and separated. The apparatus may further comprise a supply reservoir for the cleaning fluid. This ensures that there is always a sufficient supply of cleaning fluid as the reservoir acts as a buffer to the cleaning fluid.

The conveying means may comprise a pump, the pump being adapted to provide the fluid at a high pressure to the application means. The application means may comprise applicators in the form of nozzles, sprays or jets. As the fluid is supplied at a high pressure, the cleaning action of the fluid is very efficient.

In an embodiment of the invention, the apparatus is integrated with an aggregate grading apparatus or aggregate separator. The grading apparatus preferably comprises a chute for receiving the aggregate, various mesh screens for grading the aggregate and conveyor belts for removing the graded aggregate from the separator.

In a preferred embodiment, the fluid application means are located over the chute, and/or over the grading screens and/or over the conveyor belts of the grading apparatus to ensure adequate cleaning of the aggregate whilst it is being graded. As the aggregate is spread out over the mesh screen and/or conveyors, access to the surfaces of the aggregate stones is improved which enhances the cleaning operation.

Preferably, the collection means may comprise one or more collectors which are located below the application means to receive the cleaning fluid as it seeps or drains down from the aggregate.

In a preferred embodiment, a collector is located below the graders. Another collector may be located on the underside of the machine to catch any fluid that drains down from the graders and conveyors. A further collector may be located below the conveyor belt to ensure that all waste fluid or fluid containing aggregate residues is collected.

In another embodiment of the invention, the first stage separator comprises means for sieving the washed aggregate and a first collector for collecting the cleaning fluid from the sieving means. The sieving means may be formed by the sieve trays of an aggregate separator or aggregate grader. Alternatively, the sieving means may be formed by appropriate separation means such as filters.

The apparatus may comprise means for conveying the cleaning fluid from the second stage separation means to the fluid application means. The conveying means may comprise one or more conduits and a pump for transporting the cleaning fluid through the conduits.

In a preferred embodiment, the cleaning fluid or water is gravity driven through the aggregate to the second stage separation means and the fluid is conveyed from the second stage separation means to the flow of aggregate. This reduces the required power for conveying the fluid and this in turn improves the overall operating efficiency of the apparatus.

In a further embodiment of the invention, the second stage separation means comprises means for settling the cleaning fluid to separate the silt from the cleaning fluid.

The second stage separation means may comprise at least one settling reservoir, the reservoir having an overflow. The settling reservoir may comprise an outlet for removing the aggregate residue.

Preferably the second stage separation means comprises a separator tank comprising three settling reservoirs which are connected in series and interconnected via overflows. As the (used) cleaning fluid containing silt is collected or transported to the first reservoir, the fluid is allowed to settle whereby the aggregate residue is located at the bottom of the reservoir. The remainder of the fluid overflows the first reservoir and fills the next reservoir. Again, the cleaning fluid containing unwanted aggregate substances (silt) is allowed to settle whereby the substances are located near the bottom of the reservoir. As this settling reservoir is filled, again it overflows thereby filling a third reservoir. The third reservoir has an outlet for removing the cleaning fluid in which a very low level of silt is present. This fluid is then ready for re-use.

Preferably, this outlet is located near the top of the third settling reservoir. Each settling reservoir may further comprise a further outlet located near the bottom of the settling reservoir to remove the aggregate residues. The silt may be removed by occasional suction of the silt and cleaning fluid near the bottom of the reservoir to prevent the separation tank from becoming less effective due to the build up of silt. The silt aggregate is then disposed of safely and in an environmentally friendly manner.

As the silt is periodically removed, the overall quantity of the cleaning fluid will gradually be reduced during operation of the apparatus. Therefore, the cleaning fluid must be regularly re-supplied to prevent the system from running on a low level of cleaning fluid which would otherwise affect the washing performance of the apparatus.

During operation of the apparatus, the flow of cleaning fluid is adjusted so as to achieve the desired level of cleaning of the aggregate.

In a preferred embodiment, the apparatus comprises a fluid supply reservoir for maintaining the supply of the cleaning fluid. This supply reservoir may also act as a buffer and allows continued operation of the apparatus as a sufficient supply of fluid is present in the reservoir to ensure continued operation of the apparatus whilst silt is removed at regular intervals. Preferably, the supply reservoir is integrated in the circular flow of the cleaning fluid. The second stage separation means may also form the supply reservoir.

In a further embodiment of the invention, the apparatus is integrated with an aggregate separation or grading apparatus. The aggregate may be washed prior to, during, or after washing of the aggregate. In this way the aggregate is effectively cleaned. The aggregate separation or grading apparatus may comprise one or more collectors for collecting the cleaning fluid and conveying the cleaning fluid to the second stage separator. In this way spillage of cleaning fluid is prevented which significantly reduces the amount of fluid required to clean the aggregate.

According to another aspect of the invention, there is provided an aggregate separation or grading apparatus comprising a grader for grading the aggregate, means for applying a cleaning fluid to the aggregate, a fluid collector located below said graders, second stage separation means comprising a first separator for separating at least part of the silt, fines or residues from the cleaning fluid and a second separator for separating further silts, fines or residues from the cleaning fluid.

The aggregate separation or grading apparatus may comprise a frame for supporting the grader, the second stage separation means being located below said frame. The frame may comprise a first support member and a second support member for supporting the frame from the ground, the second stage separation means being located between the support members. This ensures that the apparatus is adequately supported from the ground and is stable. Also, this ensures that the cleaning fluid is collected in the second stage separation means and driven down by gravity to the second stage separation means. The apparatus further comprises a pump for transporting the cleaning fluid to the application means. The pump may be hydraulically driven by the hydraulic supply of the aggregate separation or grading apparatus. The separation means may further comprise one or more filters for filtering the cleaning fluid to prevent the pump from being damaged by residues which may be present in the cleaning fluid.

The second stage separation means may comprise a primary separator in the form of a reservoir having an inlet for receiving the fluid, an outlet for discharging the fluid and a discharge outlet for discharging silt and other residues contained in the fluid. The discharge is spaced from the fluid inlet and fluid outlet and located below the fluid inlet and outlet to promote gravity driven separation of the silt and residues. As the silt has a higher density than the fluid, the silt and any other residues sink towards the bottom of the reservoir where the discharge outlet is located. In this way the silt is separated from the fluid.

The second stage separation means may further comprise a secondary separator in the form of a separation tank as hereinbefore described comprising setting reservoirs which are connected in series and interconnected via overflows. The primary and secondary separators may be interconnected. The secondary separation may be bypassed to allow fluid from the primary separator to be conveyed directly to the application means. This is desirable if there is no need for a further separation step to remove remaining silt.

The invention will now be described by way of example only and with reference to the accompanying drawings in which :
Figure 1 presents a diagrammatic side view of an aggregate grading and cleaning apparatus according to an embodiment of the invention in an operational position;
Figure 2 presents a diagrammatic side view of the apparatus of Figure 1 in a transport position;
Figure 3 presents a diagrammatic side view of another aggregate grading and cleaning apparatus according to an embodiment of the invention in an operational position;
Figure 4 presents a diagrammatic side view of the apparatus of Figure 3 in a transport position;
Figure 5 discloses diagrammatic views of a collector of an aggregate washing apparatus according to an embodiment of the invention; Fig 5a shows a view from above and Fig 5b shows a side view;
Figure 6 presents diagrammatic perspective views of a second stage separation means for separating silt according to another embodiment of the invention; Fig 6a and 6c are side views, Fig 6b is a view from above;
Figure 7 presents a diagrammatic perspective view of a further collector according to another embodiment of the invention; and
Figure 8 presents a diagrammatic perspective view of second stage separation means according to yet another embodiment of the invention.

The aggregate grading and cleaning apparatus 400 comprises a frame 402 which is supported from the ground by support members 404 and a pair or wheels 406. The support members 404 are collapsable to facilitate transport of the apparatus 400.

The frame 402 supports a hopper 408 for receiving aggregate, a conveyor belt 410 for transporting the aggregate to a grading unit 412. The grading unit 412 comprises three mesh screens of various mesh sizes (for example 14mm, 8mm and 3mm mesh size) which separate the aggregate in a coarse fraction, a medium fraction and a fine fraction. These fractions are removed from their respective mesh screens by a central conveyor 414 for the coarse fraction and conveyors 416 and 418 for the medium and fine fractions. The latter conveyors 416, 418 dispose of the fractions transversely relative to the central, length axis of the apparatus 400.

The apparatus 400 further comprises an aggregate cleaning system 420. This system 420 comprises: second stage separation means in the form of a primary separator 428 and a secondary separator 421 comprising a reservoir 422 comprising the cleaning fluid such as water; a conduit (not shown) for conducting the fluid to applicators in the form of jets (not shown) for applying the fluid to the aggregate; a collector 424 for collecting the fluid from the aggregate upon grading; and, a further conduit 426 for conducting the fluid to the primary separators for separating the coarse residues or silts from the fluid before it is conveyed into the secondary separator. The separator 428 has an aperture 430 for removing the coarse material from the separator 428. The fluid is conveyed from the first separator 428 into the secondary separator 42, via a conduit.

The reservoir 422 comprises various compartments for settling the cleaning fluid to enable the residues to settle. These resides are removable via a extraction conduit 432 which is in contact with the various compartments in the reservoir 422. The system 420 further comprises a pump which is driven by the hydraulic system of the grading apparatus. The pump is adapted to convey the water to the jets from the reservoir 422 at a pressure which is sufficient for the jets to effectively clean the aggregate material.

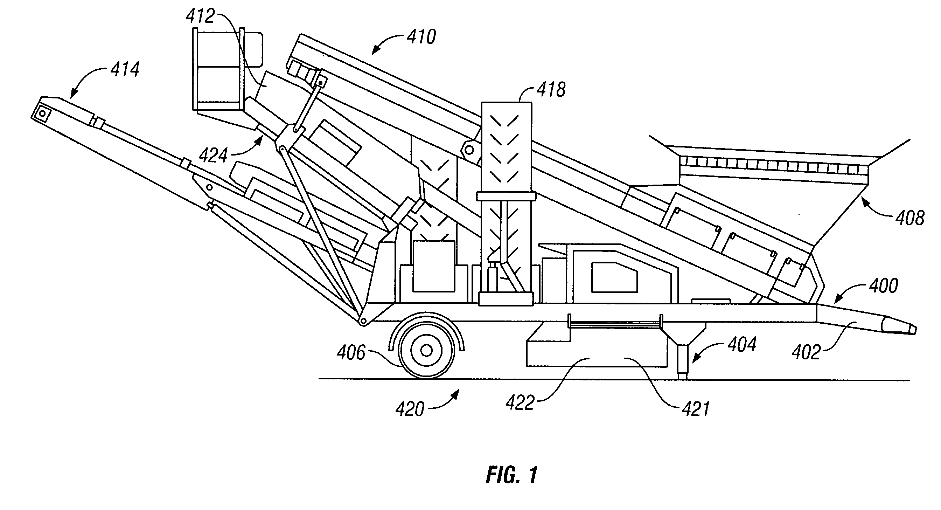

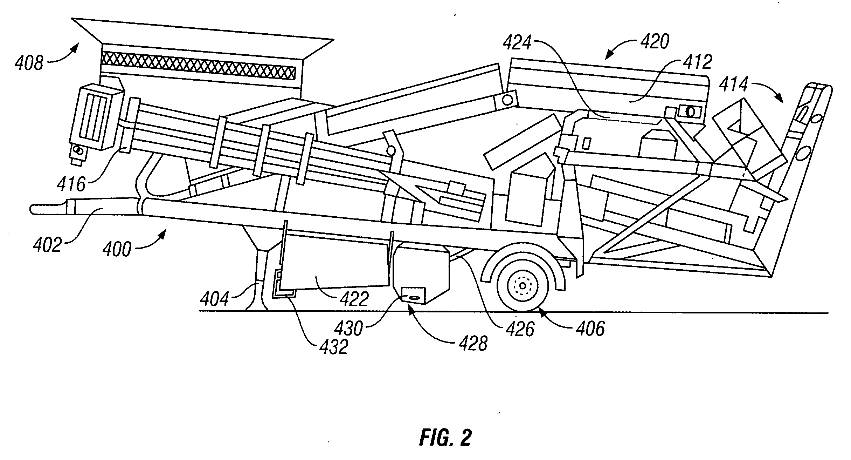

Figure 2 presents the grading apparatus in a transport position and Figure 1 presents the grading apparatus in a in-use, operating configuration.

In use, the apparatus 400 is located on a site and is configured into the in-use, operating position as is shown in Figure 1. A supply of cleaning fluid such as water or water containing suitable cleaning compositions or detergents is provided in the reservoir 422. This fluid may be provided by a tanker from a suitable site where this fluid is available. When the reservoir 422 is filled to a sufficient level, the apparatus is operated whereby the aggregate is separated out into the desired fractions. The mesh size of the screens may be adapted to select the desired fractions. The pump is activated to apply the cleaning fluid to the aggregate whilst it is conveyed from the hopper 408 to the grading unit 412. The cleaning fluid is collected by the collecting tray 424 and is conveyed to the primary separator 428 which provides initial separation of the residues from the cleaning fluid. From the separator 428, the fluid is conveyed to the reservoir 422 of the secondary separator 421 which comprises various settling compartments in which the finer residues and silts are further separated from the cleaning fluid by settling action. These residues may be removed periodically via the conduit 432. The pump conveys the cleaning fluid to the jets to apply the fluid to the aggregate in a closed loop system.

We have found that it is beneficial to periodically remove cleaning fluid from the apparatus after the apparatus has been in use for a certain period and to substitute the cleaning fluid for a fresh batch of fluid. Once a batch is removed, it is allowed to settle so that all residues can be removed which are still present in the batch. This batch of fluid is then available for subsequent use and this batch can then be used to substitute the batch which The cleaning system 420 can be supplied as a kit of parts and can be retrofitted to existing aggregate grading and separating apparatus.

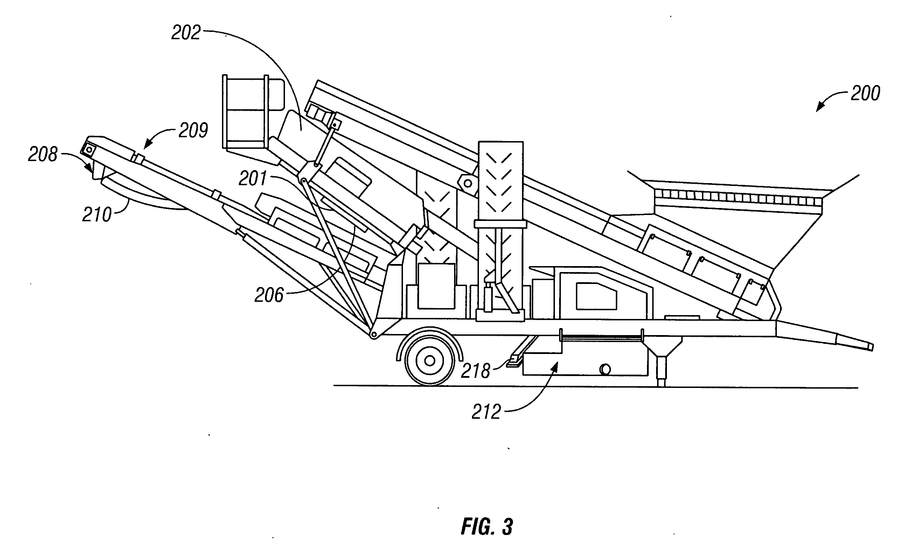

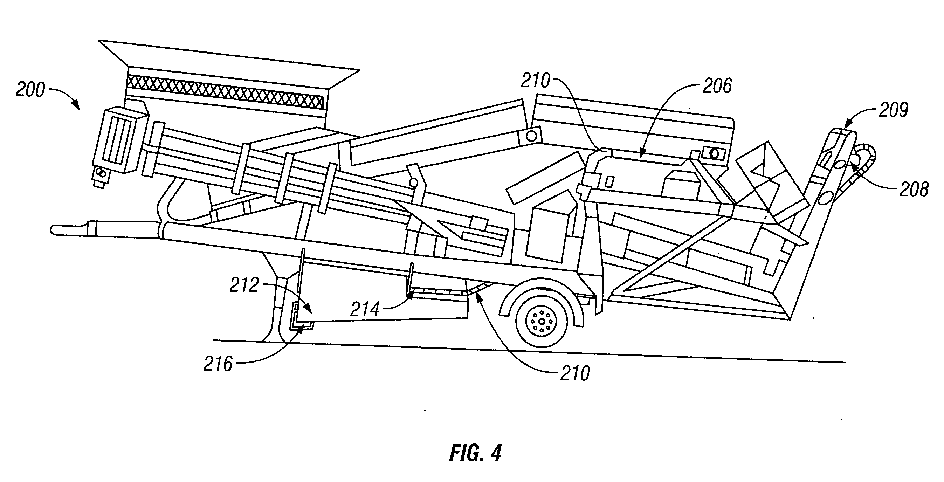

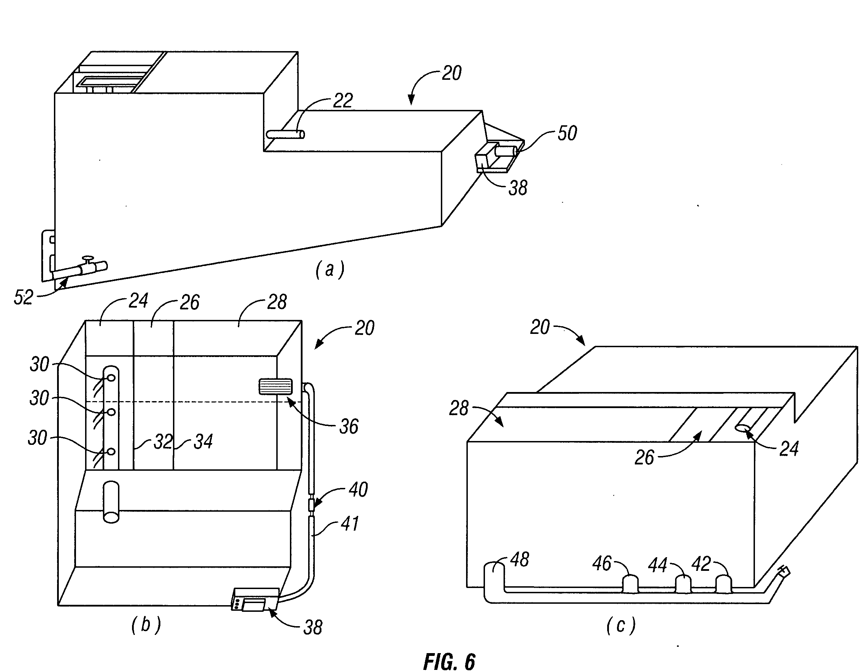

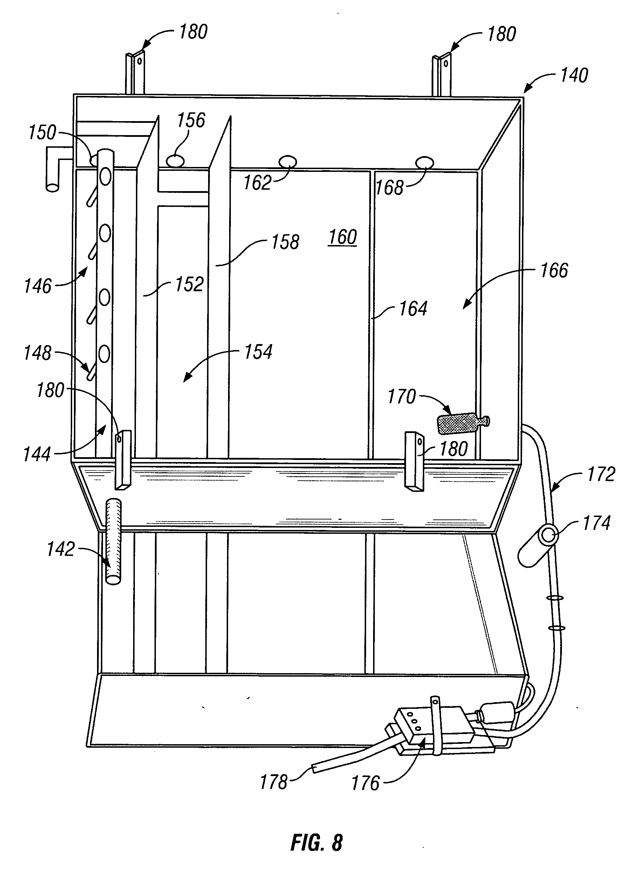

A further aggregate cleaning apparatus is presented in Figures 3 and 4. This apparatus 200 is largely similar to the apparatus of Figures 1 and 2. This apparatus 200 comprises means for applying a cleaning fluid to a flow of aggregate (not shown), first stage separation means 202 for separating the washed aggregate from the cleaning fluid in the form of a grader, sieve tray or aggregate separating bed, and second stage separation means 212 as shown in Figures 6 and 8, for separating silt from the cleaning fluid and means for recirculating the cleaning fluid 218 such that the recirculated fluid is applied to the flow of aggregate.

Figure 3 shows the apparatus in an operational condition, whereas Figure 4 shows the separator in its transport position.

The aggregate cleaning apparatus 200 comprises a first collector 206, which is located below the sieve tray or aggregate separating bed of the aggregate grading and cleaning apparatus 200. A second collector 208 is located below the conveyor 209 to collect additional quantities of the fluid. The fluid which is collected by the collectors 206, 208 is conveyed, driven by gravity via hoses 210 to the second stage separation means in the form of a separator tank 212, which is located below the apparatus 200. The separator tank 212 operates in a manner as described below in relation to Figures 6 and 8. The separator tank 212 comprises an inlet 214 for receiving the fluid and an outlet 216 for removing silt and other unwanted substances from the tank 212. The tank 212 further comprises a return hose (not shown) which provides the water to nozzles or jets (not shown) which are located over the sieve trays for grading the aggregate to effectively clean the aggregate. The system is powered by pump at 218 which is mounted on the separator tank 212.

In use, fluid is conveyed to the aggregate from the separator tank 212 and applied to the aggregate by means of the jets. The fluid is collected below the graders 202 by means of collecting tray 206 and the fluid is also collected from the central conveyor 209 for disposing of coarse fractions by a further collector 210. The fluid is conveyed to the tank 212 by conduits 210. Once in the tank 212, the fluid is allowed to settle so that residues remain at the bottom of the tank 212, so that they can be periodically removed via conduit 218.

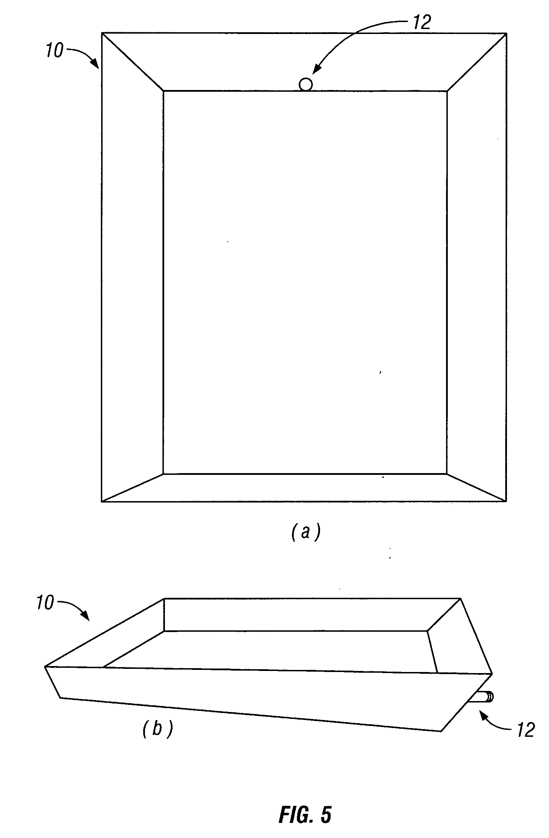

The various parts of the aggregate cleaning system of the aggregate grading and cleaning apparatus of Figures 3 and 4 will now be described in more detail below with reference to Figures 5 to 8.

The first stage separation means is essentially formed by the collector 10 as shown in Figures 3a and 3b in combination with the sieve trays or mesh screens which are used for grading or separating the aggregate in the aggregate separator as shown in Figures 3 and 4. The collector 10 is located below the sieve tray of the aggregate separator 200. The collector 10 is of a dish shape, and is mounted in such a way that the lowest point of the collector is formed by the outlet 12. The collected cleaning fluid, together with any sediments, residuals and any other substances (silt) is removed from the collector 10 via outlet 12. The used cleaning fluid is then conveyed via a pipe or hose 210 to the second stage separation means, in which these substances are removed from the water.

The second stage separation means in the form of separator 20 is shown in more detail in Figures 6a to 6c. The fluid from the collector 10 is conveyed into the separator 20 via inlet 22. Essentially, the separator 20 comprises a settling tank which has three reservoirs 24, 26, 28. The used cleaning fluid including silt from the aggregate is received in the first reservoir 24 via inlets 30 in the fluid return pipe. The first reservoir 24 comprises an overflow 32 to allow fluid to overflow into the second reservoir 26. Reservoir 26 has a second overflow or baffle plate 34 to allow water to overflow into the third reservoir 28. Fluid is collected via filter 36 in the third reservoir, and it is pumped out of the separator 20 by pump 38 via conduit 41 and outlet 50. An additional secondary filter 40 can be provided in the conduit 41 to the pump 38. Each reservoir 24, 26, 28 has silt outlets 42, 44, 46, 48 for removing the silt and other unwanted substances from the reservoirs to effectively clean these reservoirs 24, 26, 28.

The separator 20 operates by receiving the fluid from the aggregate cleaning operation in first reservoir 24 via inlets 30. As the fluid enters the first reservoir 24, the fluid is allowed to settle, whereby any sediments such as silt and other unwanted substances are retained in the first reservoir 24. As the fluid level continues to rise, the fluid enters the second reservoir 26 via the overflow or baffle plate 32, and subsequently, this reservoir 26 is filled. When this reservoir 26 is filled, the fluid flows into the third reservoir 28 via overflow or baffle plate 34. This third reservoir 28 is subsequently filled with the fluid and any residues or unwanted substances in the fluid are retained at the bottom of the separator 20 in the respective reservoirs 24 to 28. The silt sediment is removed by pumping the sediment out via the outlet pipe 52, which is connected to the outlets 42, 44, 46 and 48 of the reservoir 24, 26, 28. The cleaned fluid in which a very low level of silt substances is present is removed from the third reservoir 28 via the filter 36 by means of pump 38, and the fluid is pumped out via outlet pipe 50.

As is evident from Figure 6, the separator tank 20 has an angled bottom to promote separation of the silt and the cleaning fluid. The silt settles in the lowest portion of the separation tank 20 as it is of a higher density than the cleaning fluid.

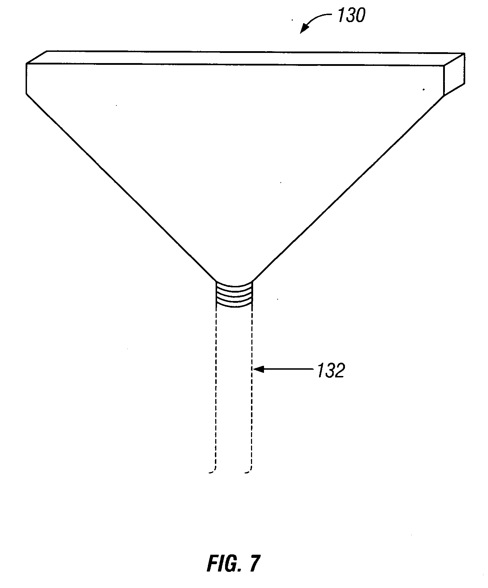

An alternative collector 130 which can be used in addition to the collector 10 as shown in Figure 5 is shown in Figure 7. This collector 130 is of a funnel shape. This shape is particularly suited for receiving fluid from the aggregate as it is transported on conveyor belts and such like. The collector 130 is connected to a hose 132 which conveys the fluid to a suitable second stage separator such as the separator 20 as shown in Figure 6.

Figure 8 presents an alternative second stage separator 140 which is largely similar to the separator 20 as shown in Figure 6. The separator 140 has an inlet 142 which conveys the fluid to a first reservoir 146 in which the cleaning fluid and silt is received via conduit 144 in which outlets 148 are provided. The first reservoir 146 has a first outlet 150 to allow removal of silt, sediments, residues and other unwanted substances from the reservoir 146. The reservoir 146 comprises a baffle plate or overflow 152, which allows fluid to flow into a second reservoir 154. This reservoir has an outlet 156 and a baffle plate 158 to allow water to be conveyed into third reservoir 160 which has a further outlet 162 and baffle plate 164. This reservoir has an outlet 168 for removing the silt from the fluid. The fluid is removed from the separator 140 via filter 170 and outlet conduit 172. The conduit 172 comprises a further filter 174. The fluid is driven by means of a pump 176 with outlet 178 which allows the fluid to be returned to the fluid applications to clean the aggregate.

The separator 140 has mounts 180 for mounting the separator to an aggregate separator or aggregate grading apparatus which can be any conventional aggregate separator or aggregate grader.

The operation of the separator 140 is largely similar to the separator 20 as shown in Figure 6. The difference between the separator 20 as shown in Figure 6 and the separator 140 of Figure 8 is the additional reservoir 154. This additional reservoir 154 has the advantage that further separation of the water takes place so that in effect, less silt, sediments and other residues are present in the recycled fluid as it leaves the outlet 172 of the separator 140 in comparison to the fluid from the outlet 50 of separator 20.

## Claims

1. A method of on-site aggregate cleaning comprising:
providing a limited cleaning fluid supply on-site,
providing a flow of aggregate to be cleaned,
providing means for applying the cleaning fluid to the aggregate,
providing first stage separation means for separating the aggregate from the cleaning fluid, the first stage separation means comprising means (412) for grading the aggregate,
providing second stage separation means (421) for separating silt from the cleaning fluid,
providing means for conveying the cleaning fluid from the second stage separation means to the flow of aggregate to thereby re-circulate the cleaning fluid,
the method further comprising:
applying the cleaning fluid to the aggregate
in a first stage separating the washed aggregate from the cleaning fluid,
in a second stage separating the silt from the cleaning fluid, the cleaning fluid being collected whilst the aggregate is graded, and
re-circulating the cleaning fluid from the second stage separation means (421) to the flow of aggregate.

2. A method according to claim 1, **characterised in that** the second separation stage comprises providing a reservoir (422) for settling the cleaning fluid, the cleaning fluid being settled to thereby separate the silt from the cleaning fluid.

3. A method according to claim 2, **characterised in that** the method further comprises periodically or regularly removing the silt from the reservoir (422).

4. An apparatus (420) for on-site cleaning of aggregate, comprising:
means for applying a cleaning fluid to a flow of aggregate,
first stage separation means for separating the washed aggregate from the cleaning fluid, the first stage separation means comprising means (412) for grading the aggregate,
a collector (424) for collecting the fluid whilst the aggregate is graded.
second stage separation means (421) for separating the silt from the cleaning fluid,
means for conveying the cleaning fluid from the second stage separation means to the flow of aggregate to re-circulate the cleaning fluid from the second stage separation means to the flow of aggregate.

5. An apparatus (420) according to claim 4, **characterised in that** the apparatus (420) comprises one or more further collectors for collecting the cleaning fluid from the washed aggregate and one or more further conveying means for conveying the cleaning fluid from the collectors to the second stage separation means.

6. An apparatus (420) according to claim 5, **characterised in that** the second stage separation means (421) comprises a reservoir (422) for settling the cleaning fluid to separate the silt from the cleaning fluid.

7. An apparatus (420) according to any of the preceding claims, **characterised in that** the second stage separation means comprises a first separator (428) for partly separating silt from the fluid and a further separator (421) for removing silt from the fluid, each separator (428,421) comprising a separate silt discharge outlet (430,432).

8. An apparatus (420) according to claims 4 to 7, **characterised in that** the second stage separation means (421) comprises at least two reservoirs, the reservoirs being interconnected by means of overflows, the first reservoir being adapted to receive the fluid to allow the fluid to settle in the first reservoir and to overflow said first reservoir to fill a subsequent reservoir whereby silt settles at the bottom of the reservoirs.

9. An apparatus (420) according to claim 8, **characterised in that** the reservoir comprises a discharge outlet (432) for occasionally or regularly removing the silt from the reservoir.

10. An apparatus according to any of claims 4 to 9, **characterised in that** the grading means (412) grade the aggregate prior to, during or after washing of the aggregate.

11. A mobile aggregate separation apparatus (400) comprising an aggregate cleaning apparatus (420) as defined in any of claims 4 to 10.

12. A kit of parts adapted to be fitted to a mobile aggregate separation or grading apparatus (400) to form an apparatus (420) according to claim 10 comprising a collector, second stage separation means and means for conveying cleaning fluid.

13. A mobile aggregate separation apparatus (400) substantially as hereinbefore described and as shown in the accompanying drawings.

14. An apparatus for on-site cleaning (420) substantially as hereinbefore described and as shown in the accompanying drawings.
